# EUROPÄISCHE PATENTSCHRIFT

(11) **EP 0 829 786 B1**
(45) Veröffentlichungstag und Bekanntmachung des Hinweises auf die Patenterteilung: **03.11.2004**
(21) Anmeldenummer: 97114177.5
(22) Anmeldetag: 18.08.1997
(51) Int. Cl.: G05B 19/042

(54) **Verfahren zur Steuerung der elektrischen Versorgung einer Anzahl untereinander kommunizierender Steuergeräte**
Method for controlling the electrical power supply of a number of intercommunicating control devices
Procédé de commande de l'alimentation électrique de plusieurs dispositifs de commande communiquant entre eux

(30) Priorität: 04.09.1996 DE 19635818
(43) Veröffentlichungstag der Anmeldung: 18.03.1998
(73) Patentinhaber: Volkswagen Aktiengesellschaft, 38436 Wolfsburg (DE)
(72) Erfinder: Burnus, Oliver, Dipl.-Ing., 29393 Gross Oesingen (DE)

(56) Entgegenhaltungen:
- US-A- 4 839 530
- US-A- 5 464 435

## Beschreibung

Die Erfindung betrifft ein Verfahren zur Steuerung der elektrischen Versorgung einer Anzahl untereinander auf einer Datenleitung kommunizierender Steuergeräte, bei dem nach Aussenden eines ersten definierten Datenbefehls zumindest eines der Steuergeräte in einen Ruhestrom-Verbrauchszustand und bei Aussenden eines zweiten definierten Datenbefehls, die im Ruhestrom-Verbrauchszustand befindlichen Steuergeräte in den Normal-Verbrauchszustand versetzt werden.

Aus der deutschen Offenlegungsschrift DE 195 18 306 A1 ist eine Vorrichtung zur Steuerung einer Anzahl von untereinander über eine Multiplexverbindung kommunizierender Aktuatoren eines Systems für Kraftfahrzeuge beschrieben. Jeder der Aktuatoren weist zumindest einen Signalgeber zur Erzeugung von Zustands- und Zustandsänderungsinformationen in Abhängigkeit eines Zustandes seines Aktuators und eine Steuereinheit auf, welche aus den Informationen und daraus abgeleiteten Informationen seiner Signalgeber oder der Signalgeber der anderen Aktuatoren Steuersignale erzeugt, mit denen die Stellelemente der Aktuatoren angesteuert werden.

Bei der Verwendung einer solchen Vorrichtung in einem Kraftfahrzeug, beispielsweise zur Steuerung einer Zentralverriegelungsanlage, ist es bekannt nach dem Abstellen des Kraftfahrzeuges die Steuergeräte abzuschalten oder in einen Ruhestrom-Verbrauchszustand zu versetzen.

So wird in der deutschen Offenlegungsschrift DE 37 42 312 A1 vorgeschlagen, zur Reduzierung der Leistungsaufnahme elektrischer Verbraucher während des Stillstandes des Kraftfahrzeuges sämtliche Verbraucher abzuschalten, wenn bei abgezogenen Zündschlüssel die Fahrzeugbatteriespannung den unteren Grenzwert unterschreitet. Bei dieser Lösung zur Verhinderung einer vollständigen Fahrzeugbatterieentladung werden auch Verbraucher abgeschaltet, die beispielsweise zur Manipulationssicherheit üblicherweise gerade im Stillstand eingeschaltet sein sollen. Eine ähnliche Problematik ergibt sich generell bei Steuergeräten, welche aus dem Ruhestand heraus Funktionsabläufe steuern müssen.

Des Weiteren ist aus der deutschen Offenlegungsschrift DE 41 34 034 A1 bekannt, bei einer elektronischen Schaltungsanordnung unter Verwendung eines Mikroprozessors zur elektrischen Versorgung und Abarbeitung eines Programmes zwecks Abfrage der Sensoren und Auswertung der Sensorsignale einer vorzugsweise einen Innenraumsensor, einen Lagesensor, Türkontakte und/oder dergleichen aufweisenden Kraftfahrzeug-Diebstahlwamanlage zur Abfrage eines Alarmsignals den diskontinuierlich arbeitenden Mikroprozessor mittels eines Umschaltbefehls aus dem Normalbetrieb in den Sparbetrieb zu schalten und mittels eines Rückstellsignals wieder in den Normalbetrieb zu versetzen.

In der deutschen Offenlegungsschrift DE 42 07 155 A1 ist außerdem eine Schaltungsanordnung angegeben, welche die Signale eines elektronischen Zentralverriegelungssystems eines Kraftfahrzeuges auswertet, um zu erkennen, ob das Kraftfahrzeug abgestellt wurde, und ob eine kurze oder lange Abstellzeit zu erwarten ist. Abhängig davon werden Bordnetzteilnehmer unterschiedlich als von der Fahrzeugbatterie abzutrennende Ruhestrom-Verbraucher bestimmt. Beispielsweise werden die Bordnetzteilnehmer, die bei abgestelltem Kraftfahrzeug ohnehin ausgeschaltet sind, wie zum Beispiel Fahrwerks-, Motor- oder Getriebesteuergeräte, die jedoch aktive Bauelemente enthalten, die auch im Ruhezustand Strom aufnehmen, ais mögliche Ruhestromverbraucher völlig von der Fahrzeugbatterie entkoppelt. Bordnetzteilnehmer, wie zum Beispiel die Diebstahlwarnanlage, welche zur Manipulationssicherheit eingesetzt werden, werden nicht vom Bordnetz getrennt.

Ferner ist aus der US-Patentschrift US-A-4 839 530 ein Steuerungssystem beispielsweise für die elektrische Anlage eines Kraftfahrzeugs bekannt, das eine Zentraleinheit und mehrere entlegene Einheiten aufweist, welche mit der Zentraleinheit über eine entsprechende Datenverbindung verbunden sind. Die Zentraleinheit besitzt eine Steuerschaltung und eine Spannungsversorgungsschaltung, die angeschaltet wird, um das System in einem Aktivmodus zu betreiben, und die abgeschaltet wird, um das System in einem Ruhemodus zu betreiben. Während des Aktivmodus liefert die Steuerschaltung eine Takt-Puls-Spannung als Betriebsspannung über eine Datenleitung von der Zentraleinheit zu einer entlegenen Einheit. Zum Zwecke des Abschaltens der Spannungsversorgungsschaltung unterbricht die Steuerungsschaltung die Pulsformbetriebsspannung. Um das Schalten des Systems zwischen dem Aktivmodus und dem Ruhemodus zuverlässig durchführen zu können, wird auf das Erzeugen eines speziellen Ausgangssignals hierfür verzichtet.

Es ist die Aufgabe der Erfindung, ein Verfahren zur Steuerung der elektrischen Versorgung einer Anzahl untereinander auf einer Datenverbindung kommunizierender Steuergeräte zu schaffen, welche aus dem Ruhezustand heraus Funktionsabläufe steuern müssen.

Die Aufgabe wird mit den Merkmalen des Patentanspruchs 1 gelöst. Vorteilhafte Ausund Weiterbildungen sind in den Unteransprüchen dargestellt.

Bei dem Einsatz mehrerer untereinander kommunizierender Steuergeräte im Kraftfahrzeug hat sich durchgesetzt, daß aus Systemsicherheitsgründen, die Steuergeräte nicht nur sensierte Zustandsänderungen einmalig sondern auch Zustände selbst sich gegenseitig regelmäßig mitteilen. In einem solchen Fall ist es schwierig, im Bedarfsfall alle Steuergeräte in einen Ruhestrom-Verbrauchszustand zu versetzen, da die Gefahr besteht, daß sich die Steuergeräte gegenseitig ohne vorhandene Aufweckbedingung immer wieder "Aufwecken".

Deshalb ist erfindungsgemäß vorgesehen, daß eines der Steuergeräte für die Steuerung der elektrischen Versorgung die Masterfunktion übernimmt und nur von diesem Steuergerät der Datenbefehl für den Ruhestrom-Verbrauchszustand gesendet wird. Dagegen sind alle Steuergeräte berechtigt Datenbefehle zum Aufwecken der in den Ruhestrom-Verbrauchszustand versetzte Steuergeräte zu senden, wenn in ihrem Überwachungsbereich eine Aufweckbedingung vorliegt.

Hat das für die Steuerung der elektrischen Versorgung die Masterfunktion übernehmende Steuergerät den Datenbefehl für den Ruhestrom-Verbrauchszustand gesendet, stellen alle anderen Steuergeräte den Datenverkehr ein, d. h. es werden keine Zustandsinformationen gesendet. Nach Ablauf einer definierten Zeitdauer werden alle Steuergeräte dann in den Ruhestrom-Verbrauchszustand versetzt, wenn zwischenzeitlich an keinem der Steuergeräte eine Aufweckbedingung vorlag und diese keine Zustandsänderungsinformationen gesendet hat.

Aus Gründen der Übertragungssicherheit ist außerdem vorgesehen, daß bei Vorliegen einer Aufweckbedingung an einem der Steuergeräte dieses den Datenbefehl für den Normalverbrauchszustand und erst nach Verstreichen einer definierten Zeitdauer die den Zustandswechsel enthaltende Dateninformation gesendet wird.

Das erfindungsgemäß Verfahren ist vorteilhafterweise für auf einer Datenverbindung untereinander kommunizierende Steuergeräte einer Zentralverriegelungsanlage eines Kraftfahrzeuges anwendbar.

Nachfolgend wird die Erfindung anhand eines Ausführungsbeispiels näher beschrieben. Die zugehörige Zeichnung zeigt das Blockschaltbild einer Zentralverriegelungseinrichtung.

Die gezeigte Zentralverriegelungseinrichtung für ein Kraftfahrzeug beinhaltet die Verriegelungssteuerung der Türen VL, VR, HL und HR. Zusätzlich kann die Schließfunktion einer Heckklappe einbezogen werden. Jede der Türen VL, VR, HL und HR ist mit einem als Türschloß ausgebildeten Aktuator 1 - 4 ausgestattet, wobei jeder der Aktuatoren je nach Einsatz im Kraftfahrzeug eine unterschiedliche Anzahl von Signalgeber 5 - 8 aufweist. Die Signalgeber 5a und 7a senden jeweils ein Zustandssignal "System Öffnen" und die Signalgeber 5b und 7b "System Schließen". Weitere Signalgeber 5c, 5d, 6c, 6d, 7c, 7d und 8c, 8d geben den Zustand der jeweiligen Tür an und die Signalgeber 5e, 6e und 7e, 8e senden ein Signal, das angibt, ob die Diebstahlsicherung aktiviert ist. Die Türen HL und HR weisen keine vom Benutzer aktivierbaren Türschlösser 3 und 4 auf. Aus diesem Grund fehlen hier die dafür vorgesehenen Signalgeber. Alle Signalgeber sind als Hall-Sensoren oder Mikroschalter ausgebildet. Die Ausgangssignale der Signalgeber werden jeweils an die ebenfalls in den Türen befindlichen, den einzelnen Aktuatoren 1 - 4 zugeordneten dezentralen Steuergeräte 10 - 13, welche auf dem Datenbus D im Zeitmultiplexverfahren mit den jeweils anderen dezentralen Steuergeräten und dem zentrale Steuergerät 9 kommunizieren, gesendet. Dabei senden die dezentralen Steuergeräte 10 - 13 nicht nur über die Signalgeber 5 - 8 sensierte Zustandsänderungen an die anderen Steuergeräte 9 - 13, sondern in bestimmten Zeitabständen auch den Zustand ihrer Aktuatoren 1 - 4. Dies hat den wesentlichen Vorteil, daß nach einem Ausfall der elektrischen Versorgung jedes Steuergerät 9 - 13 den aktuellen Zustand des Systems kennt.

Zur Reduzierung der Leistungsabnahme der Steuergeräte und Verhinderung der Fahrzeugbatterieentladung werden nach dem Abstellen des Kraftfahrzeuges alle Steuergeräte 9 - 13 in einen Ruhestrom-Verbrauchszustand versetzt. Dazu übernimmt im Ausführungsbeispiel das zentrale Steuergerät 9 die Masterfunktion. Hat dieses Steuergerät 9 das Signal "Zündung aus" erhalten, sendet es nach Ablauf einer vorgegebenen Zeit einen Datenbefehl für den Ruhestrom-Verbrauchszustand. Alle anderen Steuergeräte 10 - 13 beenden sofort ihren Datenverkehr auf dem Datenbus D, d. h. sie senden keine Zustandsinformationen an die anderen Steuergeräte. Gleichzeitig startet jedes Steuergerät 10 - 13 einen Timer. Während der Timerzeit sendet nur das zentrale Steuergerät 9. Liegt vor Ablauf der Timer-Zeit keine Aufweckbedingungen erzeugende Zustandsänderung vor, beendet das zentrale Steuergerät 9 den Datenverkehr ebenfalls und alle Steuergeräte 9 - 13 gehen in den Ruhestrom-Verbrauchszustand.

Ein Steuergerät 10 - 13, das sich im Ruhestrom-Verbrauchszustand befindet und durch eine durch die Signalgeber 5 - 8 erfaßte Aktion an seinem Aktuator 1 - 4 "aufgeweckt" wird, generiert einen Datenbefehl für den Normal-Verbrauchszustand und sendet diesen über den Datenbus D an alle anderen Steuergeräte. Nach einer Zeitdauer (Systemeinschwung) sendet dann das "weckende" Steuergerät 10 - 13 die die Aktion an seinem Aktuator kennzeichnende Dateninformation. Befindet sich das "weckende" Steuergerät in der durch den Datenbefehl für den Ruhestrom-Verbrauchszustand generierten Timerzeit, wird die Information sofort ohne den Datenbefehl für den Normal-Verbrauchszustand gesendet.

### BEZUGSZEICHENLISTE

- VL, VR, HL, HR: Türen
- 1 - 4: Aktuator
- 5 - 8: Signalgeber
- D: Datenbus
- 9: zentrales Steuergerät
- 10 - 13: dezentrales Steuergerät

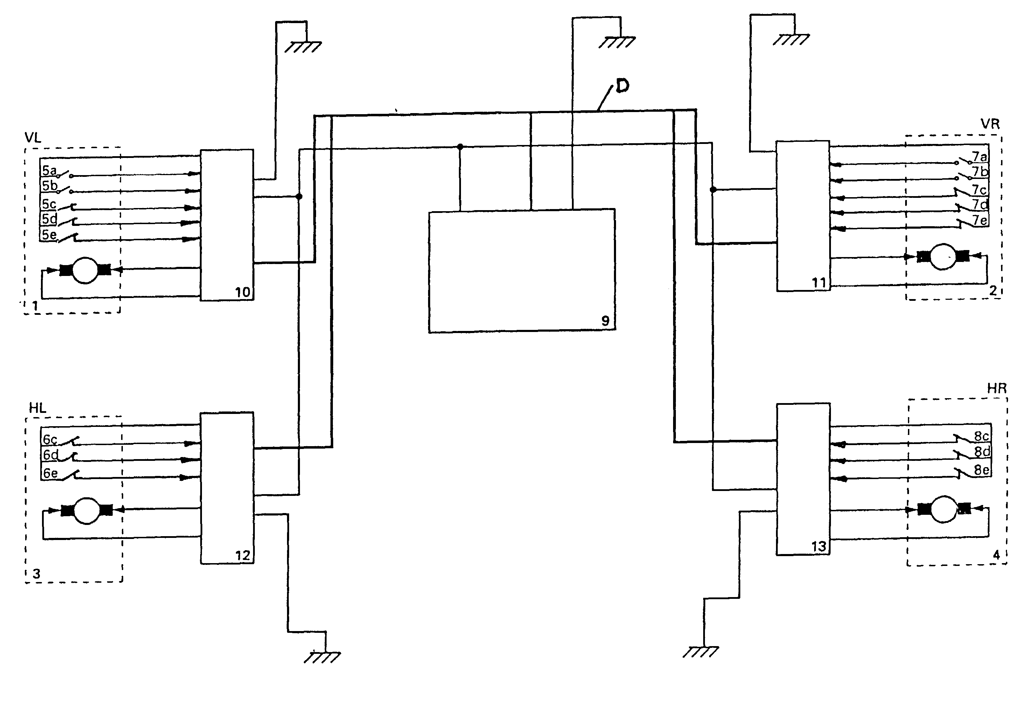

## Patentansprüche

1. Verfahren zur Steuerung der elektrischen Versorgung einer Anzahl untereinander auf einer Datenverbindung kommunizierender Steuergeräte, bei dem nach Aussenden eines ersten definierten Datenbefehls zumindest eines der Steuergeräte in einen Ruhestrom-Verbrauchszustand und bei Ausenden eines zweiten definierten Datenbefehls, die im Ruhestrom-Verbrauchszustand befindlichen Steuergeräte in den Normalverbrauchszustand versetzt werden, **dadurch gekennzeichnet, daß** eines der Steuergeräte (9) für die Steuerung der elektrischen Versorgung die Masterfunktion übernimmt und nur von diesem Steuergerät (9) der erste Datenbefehl für den Ruhestrom-Verbrauchszustand gesendet wird und alle anderen Steuergeräte (9-13) den Daten Verkehr einstellen und nach Ablauf einer definierten Zeitdauer der zweite definierte Datenbefehl für den Normal-Verbrauchszustand von einem Steuergerät (9 - 13) bei Vorliegen einer Aufweckbedingung gesendet wird.

2. Verfahren nach Anspruch 1, **dadurch gekennzeichnet, daß** nach Ablauf einer ersten definierten Zeitdauer nach dem Aussenden des ersten definierten Datenbefehls durch das für die Steuerung der elektrischen Versorgung die Masterfunktion übernehmende Steuergerät (9) und Nichtvorliegen einer Aufweckbedingung an einem der Steuergeräte (9 - 13) die Steuergeräte in den Ruhestrom-Verbrauchszustand versetzt werden.

3. Verfahren nach Anspruch 2, **dadurch gekennzeichnet, daß** während der ersten definierten Zeitdauer nur das für die Steuerung der elektrischen Versorgung die Masterfunktion übernehmende Steuergerät (9) Dateninformationen auf der Datenverbindung (D) sendet.

4. Verfahren nach Anspruch 3, **dadurch gekennzeichnet, daß** die Dateninformationen Zustandsinformationen sind.

5. Verfahren nach einem der Ansprüche 1 bis 4, **dadurch gekennzeichnet, daß** nach Ablauf einer zweiten definierten Zeitdauer nach Aussenden des durch eine Aufweckbedingung von einem der Steuergeräte (9 - 13) erzeugten zweiten definierten Datenbefehls das Steuergerät, das den zweiten definierten Datenbefehl abgesendet hat, eine die Aufweckbedingung kennzeichnende Dateninformation auf der Datenverbindung (D) sendet.

6. Verfahren nach einem der Ansprüche 1 bis 5, **dadurch gekennzeichnet, daß** während der ersten definierten Zeitdauer eine eine Aufweckbedingung kennzeichnende Dateninformation ohne Aussenden eines zweiten Datenbefehls gesendet wird.

7. Verfahren nach einem der Ansprüche 1 bis 6, **dadurch gekennzeichnet, daß** die auf der Datenverbindung untereinander kommunizierenden Steuergeräte (9 - 13) Steuergeräte eines Kraftfahrzeuges sind.

## Claims

1. Method for controlling the electrical supply to a number of control devices which communicate with one another on a data link, in which, after a first defined data instruction has been emitted, at least one of the control devices is placed in the quiescent current consumption state, and when a second defined data instruction is emitted, the control devices which are in the quiescent current consumption state are placed in the normal consumption state, **characterized in that** one of the control devices (9) performs the master function for controlling the electrical supply and the first data instruction for the quiescent current consumption state is transmitted only by this control device (9), and all the other control devices (9-13) terminate data traffic and after a defined time period has expired the second defined data instruction for the normal consumption state is transmitted by one control device (9-13) when a wake-up condition is present.

2. Method according to Claim 1, **characterized in that**, after a first defined time period has expired after the first data instruction has been emitted by the control device (9) which performs the master function for controlling the electrical supply and when the wake-up condition is not present at one of the control devices (9-13), the control devices are placed in the quiescent current consumption state.

3. Method according to Claim 2, **characterized in that**, during the first defined time period, only the control device (9) which performs the master function for controlling the electrical supply transmits data information on the data link (D).

4. Method according to Claim 3, **characterized in that** the data information is state information.

5. Method according to one of Claims 1 to 4, **characterized in that**, after the expiry of a second defined time period after the second defined data instruction which is generated by a wake-up condition by one of the control devices (9-13) has been emitted, the control device which has emitted the second defined data instruction transmits a data information item, characterizing the wake-up condition, on the data link (D).

6. Method according to one of Claims 1 to 5, **characterized in that**, during the first defined time period, a data information item which characterizes a wake-up condition is transmitted without the emission of a second data instruction.

7. Method according to one of Claims 1 to 6, **characterized in that** the control devices (9-13) which communicate with one another on the data link are control devices of a motor vehicle.

## Revendications

1. Procédé de pilotage de l'alimentation électrique d'un nombre d'appareils de commande communiquant entre eux sur une liaison de données, dans lequel, après l'émission d'une première instruction de données définie, au moins l'un des appareils de commande est placé dans un état de consommation de courant de veille et après l'émission d'une seconde instruction de données définie, les appareils de commande se trouvant dans l'état de consommation de courant de veille sont placés dans l'état de consommation normal, **caractérisé en ce que** l'un des appareils de commande (9) assure la fonction de maître pour le pilotage de l'alimentation électrique, **en ce que** la première instruction de données pour l'état de consommation de courant de veille n'est émise que par cet appareil de commande (9), **en ce que** tous les autres appareils de commande (9 à 13) règlent le transfert de données et **en ce que**, après écoulement d'une période définie, la seconde instruction de données définie pour l'état de consommation normal est émise par un appareil de commande (9 à 13), si une condition de réactivation existe.

2. Procédé selon la revendication 1, **caractérisé en ce que**, après écoulement d'une première période définie après l'émission de la première instruction de données définie par l'appareil de commande (9) assurant la fonction de maître pour le pilotage de l'alimentation électrique et si aucune condition de réactivation n'existe sur l'un des appareils de commande (9 à 13), les appareils de commande sont placés dans l'état de consommation de courant de veille.

3. Procédé selon la revendication 2, **caractérisé en ce que**, au cours de la première période définie, seul l'appareil de commande (9) assurant la fonction de maître pour le pilotage de l'alimentation électrique émet des informations de données sur la liaison de données (D).

4. Procédé selon la revendication 3, **caractérisé en ce que** les informations de données sont des informations d'état.

5. Procédé selon l'une quelconque des revendications 1 à 4, **caractérisé en ce que**, après écoulement d'une seconde période définie après l'émission de la seconde instruction de données définie générée par l'un des appareils de commande (9 à 13) suite à une condition de réactivation, l'appareil de commande qui a émis la seconde instruction de données définie émet vers la liaison de données (D) une information de données caractérisant la condition de réactivation.

6. Procédé selon l'une quelconque des revendications 1 à 5, **caractérisée en ce que**, au cours de la première période définie, une information de données caractérisant une condition de réactivation est émise sans qu'une seconde instruction de données ne soit émise.

7. Procédé selon l'une quelconque des revendications 1 à 6, **caractérisé en ce que** les appareils de commande (9 à 13) communiquant entre eux sur la liaison de données sont des appareils de commande d'un véhicule automobile.
